# EUROPEAN PATENT APPLICATION

(11) **EP 4 718 829 A1**
(43) Date of publication of application: **01.04.2026**
(21) Application number: 24223206.4
(22) Date of filing: 24.12.2024
(51) Int. Cl.: H04N 1/00, G06F 3/12

(54) **IMAGE PROCESSING APPARATUS, INFORMATION PROCESSING APPARATUS, AND INFORMATION PROCESSING METHOD**

(30) Priority: 26.09.2024 JP 2024167517
(71) Applicant: FUJIFILM Business Innovation Corp., Minato-ku Tokyo (JP)
(72) Inventor: INOMATA, Kohshiro, Yokohama-shi, Kanagawa (JP)
(74) Representative: Kurig, Thomas

(57) **Abstract**

An image processing apparatus includes an acquisition unit that performs an acquisition process of an image, a transmission unit that performs a transmission process of the image acquired by the acquisition unit, and a processor configured to, in a case in which a user operation that is an operation of a user, which is performed in a case in which a new job different from an executing job that is a job being executed in the image processing apparatus is executed, is present, stop the executing job according to an execution status of the executing job.

## Description

### BACKGROUND OF THE INVENTION

### (i) Field of the Invention

The present invention relates to an image processing apparatus, an information processing apparatus, and an information processing method.

### (ii) Description of Related Art

JP2019-024187A discloses an image processing apparatus including a Web browser and an image processing service unit that controls execution of an image process.

JP2012-205056A discloses a configuration in which an HTML is extended to define an extended attribute, and an operation mode of an image reading section is designated by the extended attribute.

### SUMMARY OF THE INVENTION

As a process in a case in which a new job is received in the middle of the execution of the job, for example, a process of stopping a job executed in advance may be considered. Meanwhile, in a case in which the process of stopping is uniformly performed, information indicating that the process is not executed to the end may be associated with the job, even though the process of the job that is executed in advance is substantially completed.

In this case, the content of the process substantially performed with respect to the job and the content of the information to be associated with the job are not consistent with each other.

An object of the present invention is to stop the executing job according to an execution status of the executing job, in a case in which a new job is received during execution of a job.

According to a first aspect of the present disclosure, there is provided an image processing apparatus including an acquisition unit that performs an acquisition process of an image, a transmission unit that performs a transmission process of the image acquired by the acquisition unit, and a processor configured to in a case in which a user operation that is an operation of a user, which is performed in a case in which a new job different from an executing job that is a job being executed in the image processing apparatus is executed, is present, stop the executing job according to an execution status of the executing job.

According to a second aspect of the present disclosure, in the image processing apparatus according to the first aspect, information about an execution result of the executing job may be associated with the executing job, and the processor may be configured to determine content of the information about the execution result associated with the executing job based on the execution status of the executing job after the acquisition process executed in association with the execution of the executing job is ended.

According to a third aspect of the present disclosure, in the image processing apparatus according to the second aspect, the processor may be configured to in a case in which the execution status is a status in which the transmission process is not started, associate information indicating that the process is not executed to the end with the executing job.

According to a fourth aspect of the present disclosure, in the image processing apparatus according to the second or the third aspect, the processor may be configured to in a case in which the execution status is a status in which the transmission process is being executed or a status in which the transmission process is ended, associate information indicating that the process is executed to the end with the executing job.

According to a fifth aspect of the present disclosure, in the image processing apparatus according to the second to fourth aspects, the processor may be configured to acquire, as the execution status, the execution status of the executing job after a predetermined time has elapsed since the acquisition process of the executing job is ended.

According to a sixth aspect of the present disclosure, in the image processing apparatus according to fifth aspect, the image processing apparatus may be capable of executing a job in at least two execution forms including a first execution form in which the transmission process is started under a condition that an instruction from the user is present after the acquisition process and a second execution form in which the transmission process is started even though the instruction is not present, in the second execution form, the transmission process may be started after a predetermined specific time has elapsed since the acquisition process is ended, and the processor may be configured to acquire, as the execution status, the execution status of the executing job after the specific time has elapsed since the acquisition process of the executing job is ended.

According to a seventh aspect of the present disclosure, in the image processing apparatus according to the second aspect, the processor may be configured to acquire, as the execution status, the execution status of the executing job in a case in which the user operation performed in a case in which the new job is executed is present, and set a state of an operation target unit operated in a case in which the user performs the user operation to a state in which the user operation is enabled, after the acquisition process of the executing job executed by the image processing apparatus is ended.

According to an eighth aspect of the present disclosure, in the image processing apparatus according to the seventh aspect, the image processing apparatus may be capable of executing a job in at least two execution forms including a first execution form in which the transmission process is started under a condition that an instruction from the user is present after the acquisition process and a second execution form in which the transmission process is started even though the instruction is not present, in the second execution form, the transmission process may be started after a predetermined specific time has elapsed since the acquisition process is ended, and the processor may be configured to set the state in which the user operation is enabled after the specific time has elapsed since the acquisition process of the executing job executed by the image processing apparatus is ended.

According to a ninth aspect of the present disclosure, in the image processing apparatus according to eighth aspect, reception display for receiving the user operation may be performed on the operation target unit after the acquisition process of the executing job executed by the image processing apparatus is ended, and the processor may be configured to perform a covering display of the reception display to disable the user operation, until the specific time has elapsed since the acquisition process of the executing job executed by the image processing apparatus is ended, and erase the covering display , and set the state in which the user operation is enabled, after the specific time has elapsed.

According to a tenth aspect of the present disclosure, in the image processing apparatus according to the second aspect, the processor may be configured to acquire, as the execution status, the execution status of the executing job after the acquisition process of the new job is ended.

According to an eleventh aspect of the present disclosure, in the image processing apparatus according to the second aspect, the processor may be configured to in a case in which an update process of a screen, on which information about the executing job is displayed, is performed in a state in which the user operation performed in a case in which the new job is executed is not performed yet, determine content of the information associated with the executing job based on the execution status of the executing job after the acquisition process executed in association with the execution of the executing job is ended.

According to a twelfth aspect of the present disclosure, in the image processing apparatus according to the second aspect, the image processing apparatus may be capable of executing a job in at least two execution forms including a first execution form in which the transmission process is started under a condition that an instruction from the user is present after the acquisition process and a second execution form in which the transmission process is started even though the instruction is not present.

According to a thirteenth aspect of the present disclosure, in the image processing apparatus according to the first aspect, information about an execution result of the executing job may be associated with the executing job, and the processor may be configured to cause the information about the execution result, which is associated with the executing job, to be different according to the execution status of the executing job after the acquisition process executed in association with the execution of the executing job is ended.

According to a fourteenth aspect of the present disclosure, there is provided an image processing apparatus including an acquisition unit that performs an acquisition process of an image; a transmission unit that performs a transmission process of the image acquired by the acquisition unit; and a processor configured to in a case in which a user operation that is an operation of a user, which is performed in a case in which a new job different from an executing job that is a job being executed in the image processing apparatus is executed, is present, determine content of information about an execution result of the executing job, the information being associated with the executing job, based on an execution status of the executing job, and set a state of an operation target unit operated in a case in which the user performs the user operation to a state in which the user operation is enabled after the acquisition process of the executing job is ended.

According to a fifteenth aspect of the present disclosure, in the image processing apparatus according to the fourteenth aspect, the image processing apparatus may be capable of executing a job in at least two execution forms including a first execution form in which the transmission process is started under a condition that an instruction from the user is present after the acquisition process and a second execution form in which the transmission process is started even though the instruction is not present, in the second execution form, the transmission process may be started after a predetermined specific time has elapsed since the acquisition process is ended, and the processor may be configured to set the state in which the user operation is enabled after the specific time has elapsed since the acquisition process of the executing job executed by the image processing apparatus is ended.

According to a sixteenth aspect of the present disclosure, there is provided an information processing apparatus including a processor configured to in a case in which a user operation that is an operation of a user, which is performed in a case in which a new job different from an executing job that is a job being executed in an apparatus capable of executing an acquisition process of an image and a transmission process of the acquired image is executed, is present, stop the executing job according to an execution status of the executing job.

According to a seventeenth aspect of the present disclosure, there is provided an information processing apparatus including a processor configured to in a case in which a user operation that is an operation of a user, which is performed in a case in which a new job different from an executing job that is a job being executed in an apparatus capable of executing an acquisition process of an image and a transmission process of the acquired image is executed, is present, determine content of information about an execution result of the executing job, the information being associated with the executing job, based on an execution status of the executing job; and set a state of an operation target unit operated in a case in which the user performs the user operation to a state in which the user operation is enabled, after the acquisition process of the executing job is ended.

According to a eighteenth aspect of the present disclosure, there is provided an information processing method including stopping in a case in which a user operation that is an operation of a user, which is performed in a case in which a new job different from an executing job that is a job being executed in an apparatus capable of executing an acquisition process of an image and a transmission process of the acquired image is executed, is present, the executing job according to an execution status of the executing job.

According to a nineteenth aspect of the present disclosure, there is provided an information processing method including determining in a case in which a user operation that is an operation of a user, which is performed in a case in which a new job different from an executing job that is a job being executed in an apparatus capable of executing an acquisition process of an image and a transmission process of the acquired image is executed, is present, content of information about an execution result of the executing job, the information being associated with the executing job, based on an execution status of the executing job; and setting a state of an operation target unit operated in a case in which the user performs the user operation to a state in which the user operation is enabled, after the acquisition process of the executing job is ended.

According to the first aspect of the present disclosure, in a case in which a new job is received during execution of the job, it is possible to stop the executing job according to the execution status of the executing job.

According to the second aspect of the present invention, it is possible to reduce the likelihood of inconsistencies between a content of job execution and a content of information associated with the job, compared to a case where the information indicating that the process is not executed to the end is uniformly associated with the executing job as the information on the execution result of the executing job.

According to the third aspect of the present invention, it is possible to associate the job for which the processing has not been executed to the end with the information indicating that the process is not executed to the end.

According to the fourth aspect of the present invention, it is possible to associate the job for which the processing has been executed with the information indicating that the process is executed to the end.

According to the fifth aspect of the present invention, it is possible to reduce the likelihood of the inconsistencies between the content of the job execution and the content of the information associated with the job, compared to a case where the execution status of the executing job is acquired before the acquisition process of the executing job is ended.

According to the sixth aspect of the present invention, it is possible to reduce the likelihood of the inconsistencies between the content of the job execution and the content of the information associated with the job, compared to a case where the execution status of the executing job is acquired before the acquisition process of the executing job is ended.

According to the seventh aspect of the present invention, accuracy of the information associated with the job can be improved, compared to a case where a state in which the user operation is enabled before an acquisition process of an executing job executed in an image processing apparatus is ended.

According to the eighth aspect of the present invention, the accuracy of the information associated with the job can be improved, compared to a case where a state in which the user operation is enabled before an acquisition process of an executing job executed in an image processing apparatus is ended.

According to the ninth aspect of the present invention, it is possible to prevent a user operation from being performed before a specific time has elapsed.

According to the tenth aspect of the present invention, the accuracy of the information associated with the job can be improved, compared to a case where the execution status of the execution job is acquired before an acquisition process for a new job is ended.

According to the eleventh aspect of the present invention, it is possible to reduce the likelihood of inconsistencies between the content of job execution and the content of information associated with the job, compared to a case where the executing job is uniformly associated with the information indicating that the process is not executed to the end as the information on the execution result in a case where an update process of a screen is performed.

According to the twelfth aspect of the present invention, it is possible to reduce the likelihood of inconsistencies between the content of job execution and the content of information associated with the job, compared to a case where the job executed on the image processing apparatus capable of executing in at least two execution forms including a first execution form in which the transmission process is started under a condition that an instruction from a user is present after the acquisition process and a second execution form in which the transmission process is started even though the instruction is not present is uniformly associated with information indicating that the process is not executed to the end.

According to the thirteenth aspect of the present invention, it is possible to reduce the likelihood of inconsistencies between the content of job execution and the content of information associated with the job, compared to a case where the information indicating that the process is not executed to the end is uniformly associated with the executing job as information on the execution result of the executing job.

According to the fourteenth aspect of the present invention, the accuracy of the information associated with the job can be improved, compared to a case where a state in which the user operation is enabled before an acquisition process of an executing job executed in an image processing apparatus is ended.

According to the fifteenth aspect of the present invention, the accuracy of the information associated with the job can be improved, compared to a case where a state in which the user operation is enabled before an acquisition process of an executing job executed in an image processing apparatus is ended.

According to the sixteenth aspect of the present invention, in a case in which the new job is received during the execution of the job, it is possible to stop the executing job according to the execution status of the executing job.

According to the seventeenth aspect of the present invention, the accuracy of the information associated with the job can be improved, compared to a case where a state in which the user operation is enabled before an acquisition process of an executing job executed in an image processing apparatus is ended.

According to the eighteenth aspect of the present invention, in a case in which the new job is received during the execution of the job, it is possible to stop the executing job according to the execution status of the executing job.

According to the nineteenth aspect of the present invention, accuracy of the information associated with the job can be improved, compared to a case where a state in which the user operation is enabled before the acquisition process of the executing job is ended.

### BRIEF DESCRIPTION OF THE DRAWINGS

Exemplary embodiment(s) of the present invention will be described in detail based on the following figures, wherein:
Fig. 1 is a diagram showing a configuration example of an information processing system;
Fig. 2 is a diagram showing an example of a hardware configuration of the image processing apparatus;
Fig. 3 is a diagram showing a screen displayed on an operation target unit of the image processing apparatus in which a job is executed in a first execution form;
Fig. 4 is a diagram showing a screen displayed on an operation target unit of an image processing apparatus in which a job is executed in a second execution form;
Figs. 5A and 5B are diagrams showing a process in a case in which a covering display is performed;
Fig. 6 is a flowchart showing an example of a flow of the process;
Fig. 7 is a diagram showing a confirmation screen;
Fig. 8 is a flowchart showing an example of a flow of another process; and
(A) and (B) of Fig. 9 are diagrams showing a first execution form and a second execution form.

### DETAILED DESCRIPTION OF THE INVENTION

Hereinafter, exemplary embodiments of the present invention will be described in detail with reference to the accompanying drawings.

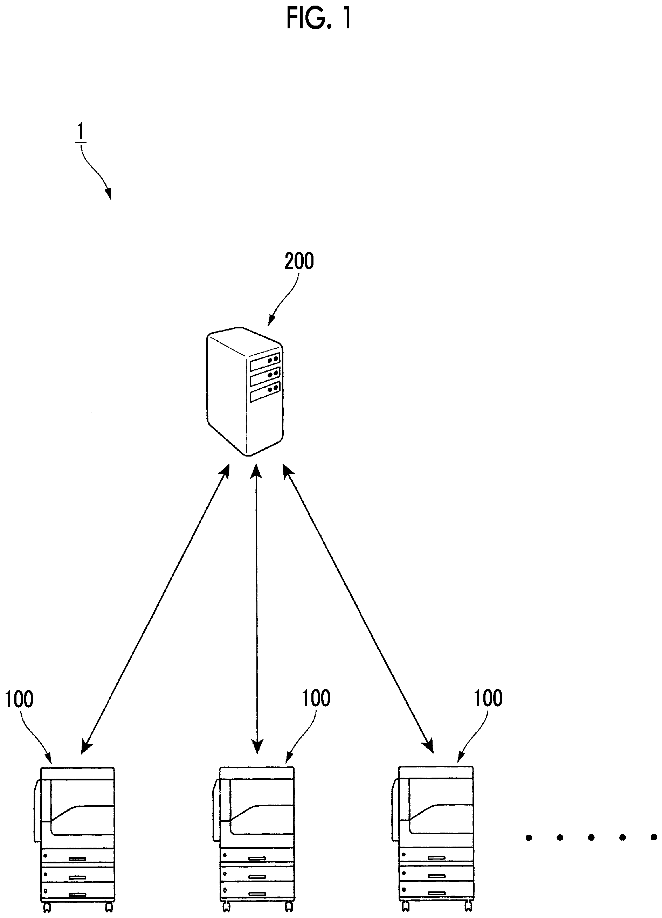

Fig. 1 is a diagram showing a configuration example of an information processing system 1 of the present exemplary embodiment.

The information processing system 1 of the present exemplary embodiment is provided with a plurality of image processing apparatuses 100. In addition, the information processing system 1 is provided with an external apparatus 200 connected to the plurality of image processing apparatuses 100 via a communication line. Examples of the external apparatus 200 include a server.

Each of the image processing apparatuses 100 has an image forming function of forming an image on a recording medium such as paper. Each of the image processing apparatuses 100 can also be regarded as an image forming apparatus.

In addition, each of the image processing apparatuses 100 includes an image acquisition function in addition to the image forming function.

Further, each of the image processing apparatuses 100 includes a transmission and reception function of transmitting and receiving various types of information such as an image file.

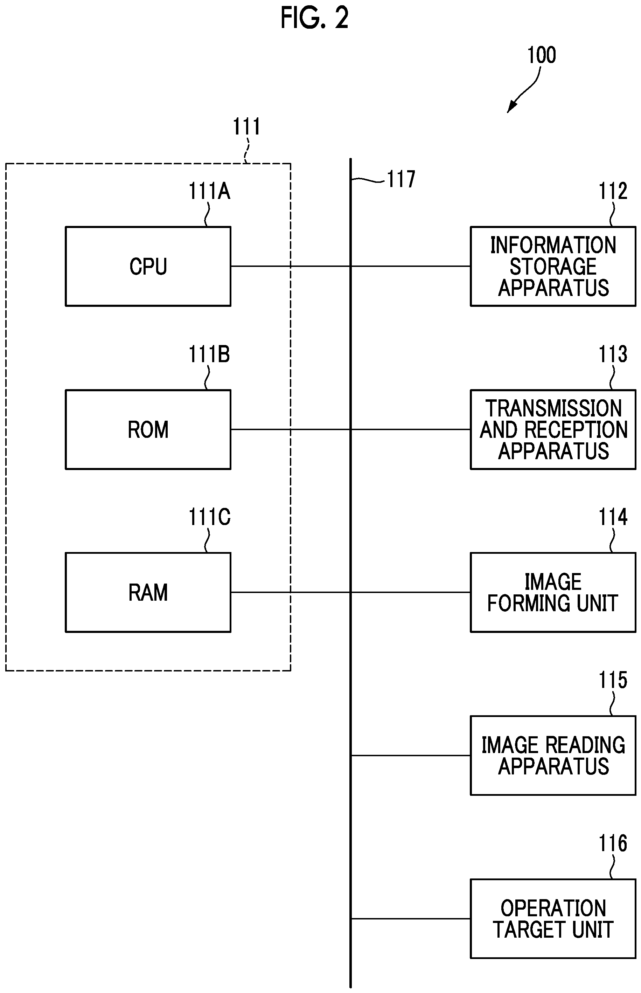

Fig. 2 is a diagram showing an example of a hardware configuration of the image processing apparatus 100.

The image processing apparatus 100 includes an information processing apparatus 111 and an information storage apparatus 112 that stores information. In addition, the image processing apparatus 100 includes a transmission and reception apparatus 113 that transmits and receives information.

Further, the image processing apparatus 100 includes an image forming unit 114 that forms an image on a recording medium such as paper.

In addition, the image processing apparatus 100 includes an image reading apparatus 115 that reads an image on an original document. The image reading apparatus 115 is a so-called scanner apparatus.

Further, the image processing apparatus 100 is provided with an operation target unit 116 operated by a user.

In a case in which the user performs a user operation, which is an operation performed by the user, the user performs an operation on the operation target unit 116.

The operation target unit 116 is configured by, for example, a touch panel. The operation target unit 116 may be configured by a keyboard, a mouse, or the like.

The operation target unit 116 of the present exemplary embodiment also has an information display function. The operation target unit 116 can be regarded as a display apparatus that displays information.

The operation target unit 116 on which the user performs an operation and the display apparatus that displays information may be individually provided.

The information processing apparatus 111 is configured by a computer.

The information processing apparatus 111 includes a Central Processing Unit (CPU) 111A as an example of a processor that executes various types of processes described later. In addition, the information processing apparatus 111 includes a Read Only Memory (ROM) 111B in which software is stored. In addition, the information processing apparatus 111 includes a Random Access Memory (RAM) 111C used as a work area.

The information storage apparatus 112 is realized by existing information storage apparatuses such as a hard disk drive, a semiconductor memory, and a magnetic tape.

The program executed by the CPU 111A may be provided to the image processing apparatus 100 in a state of being stored in a recording medium. This recording medium is a computer-readable recording medium.

Examples of the recording medium include a magnetic recording medium, such as a magnetic tape or a magnetic disk, and an optical recording medium, such as an optical disk. Examples of the recording medium include an optical magnetic recording medium and a semiconductor memory.

Further, the program executed by the CPU 111A may be provided to the image processing apparatus 100 by using a communication unit. Examples of the communication unit include a communication unit that uses an Internet line.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The image forming unit 114 forms an image on a recording medium such as paper by using an electrophotographic type, an inkjet type, or the like.

The image reading apparatus 115 as an example of an acquisition unit is a so-called scanner apparatus. The image reading apparatus 115 performs an image acquisition process. The image reading apparatus 115 reads an image on the set original document to acquire the image.

The transmission and reception apparatus 113 as an example of the transmission unit transmits information to the external apparatus 200 (see Fig. 1). In addition, the transmission and reception apparatus 113 receives information from the external apparatus 200.

In the processing described below, the transmission and reception apparatus 113 performs a transmission process of the image acquired by the image reading apparatus 115. The transmission and reception apparatus 113 transmits the image acquired by the image reading apparatus 115 to the external apparatus 200.

The transmission destination of the image is not particularly limited.

The external apparatus 200 that is the transmission destination of the image is not limited to the server. In addition, examples of the transmission destination of the image include a terminal apparatus owned by the user in addition thereto.

Examples of the terminal apparatus include a Personal Computer (PC). In addition, examples of the terminal apparatus include a tablet terminal in addition thereto. In addition, examples of the terminal apparatus include a smartphone in addition thereto.

### [Process in Image Processing Apparatus 100]

In the image processing apparatus 100, a job including an image acquisition process and an image transmission process can be executed.

In a case in which the image acquisition process is performed, first, the image reading apparatus 115, which is an example of the acquisition unit, performs the image acquisition process.

Thereafter, the transmission and reception apparatus 113, which is an example of a transmission unit, performs the transmission process of the image acquired by the image reading apparatus 115.

The image processing apparatus 100 is an apparatus capable of executing a job in at least two execution forms including the first execution form and the second execution form.

The first execution form is an execution form in which the transmission process is started on a condition that the instruction from the user is after the acquisition process. In the first execution form, the transmission process is started under the condition that the instruction is given from the user.

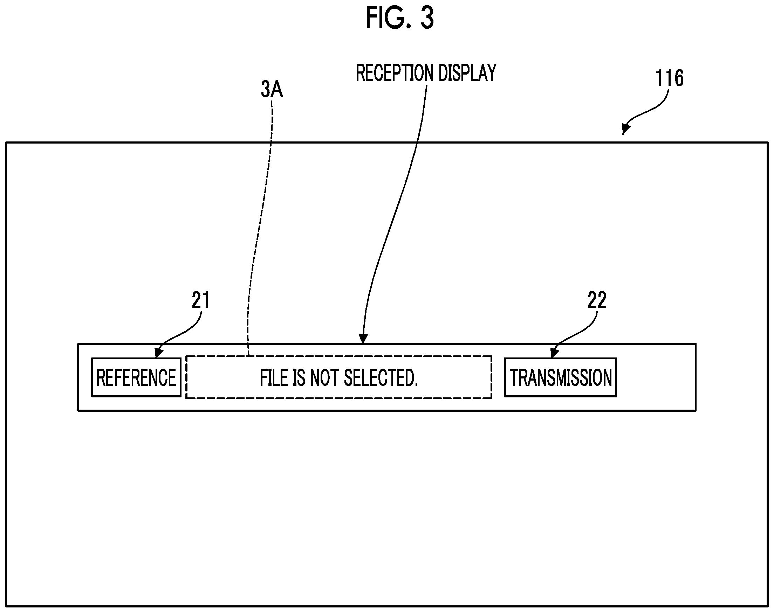

Fig. 3 is a diagram showing a screen displayed on the operation target unit 116 of the image processing apparatus 100 in which the job is executed in the first execution form.

In a case in which the job is executed in the first execution form, the reference button 21 and the transmission button 22 are displayed on the operation target unit 116.

In the first execution form, in a case in which the user selects the reference button 21, the image acquisition process by the image reading apparatus 115 is started.

As a result, an image file is generated. At this time, a file name associated with the image file is also generated.

In the first execution form, in a case in which the user presses the transmission button 22, the transmission process of the image file is started.

In a case in which the image file is generated, the generated file name is displayed in a portion indicated by reference numeral 3A.

The second execution form is an execution form in which the transmission process is started even though there is no instruction from the user.

In the second execution form, in a case in which the instruction to start the acquisition process is given from the user, the process is executed to the end. In the second execution form, the transmission process is performed even in a case in which there is no additional instruction from the user.

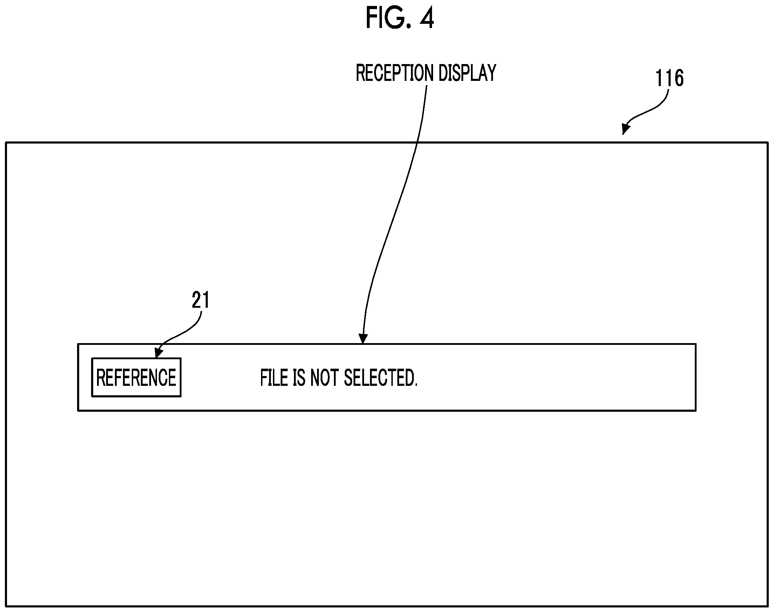

Fig. 4 is a diagram showing a screen displayed on the operation target unit 116 of the image processing apparatus 100 in which the job is executed in the second execution form.

In a case in which the job is executed in the second execution form, the reference button 21 is displayed on the operation target unit 116.

In the second execution form, in a case in which the user selects the reference button 21, the image acquisition process by the image reading apparatus 115 is started. As a result, an image file is generated. Thereafter, the transmission process of the image file is started.

In the second execution form, the transmission process of the image file is performed even in a case in which there is no additional instruction from the user.

In the present exemplary embodiment, the new selection of the reference button 21 can be performed during the execution of the job that is started.

In a status in which the job started in association with the selection of the reference button 21 has not been ended, a new selection of the reference button 21 can be performed.

In the present exemplary embodiment, after the execution of the job is started in association with the selection of the reference button 21, the reference button 21 is displayed again.

In the present exemplary embodiment, after the execution of the job is started, first, a "screen during the acquisition process" indicating that the acquisition process is being performed is displayed. The screen during the acquisition process is displayed on the operation target unit 116.

More specifically, the screen during the acquisition process displayed after the execution of the job is started until the acquisition process is ended.

In a case in which the acquisition process is ended, the reference button 21 is displayed again on the operation target unit 116.

Specifically, in a case in which the acquisition process is ended, the screen shown in Fig. 3 or 4 is displayed again.

In the present exemplary embodiment, the reference button 21 is displayed again in a status in which the started job is not executed to the end. Even in a case in which the started job is not executed to the end, the reference button 21 is displayed again in a case in which the acquisition process of the job is ended. As described above, the screen during the acquisition process is displayed until the acquisition process is ended. In a case in which the acquisition process is ended, the reference button 21 is displayed again.

Accordingly, the user can perform the new selection of the reference button 21 in a status in which the started job has not been ended. In this case, the user can execute the new job in the status in which the started job has not been ended.

Here, for example, the user may notice that the job to be executed is incorrect after the user starts the execution of the job. In this case, the user can execute a new job by performing a new selection of the reference button 21.

In the image processing apparatus 100, any one of the first program or the second program is executed.

The first program is a program for enabling the execution of the job in the first execution form. The second program is a program for enabling the execution of the job in the second execution form.

The image processing apparatus 100 is an image processing apparatus 100 capable of executing the job in two execution forms.

In other words, the image processing apparatus 100 is an image processing apparatus 100 capable of executing both the first program and the second program.

The image processing apparatus 100 of the present exemplary embodiment uses a Web application that operates on a Web browser. In the present exemplary embodiment, the image transmission process is performed by using the Web application that operates on the Web browser.

In other words, the image is uploaded to the external apparatus 200 by using the Web application that operates on the Web browser.

In the present exemplary embodiment, the first program and the second program described above can be executed as a program of the Web application. Thus, in the present exemplary embodiment, the process can be performed in two types.

In a first type, html is used.

In the first type, a specification for uploading a file using a form tag is defined. In the html tag, a file is selected by a file selection tag that is a tag for selecting a file. Then, the file is uploaded by the execution tag.

The file selection tag functions to display a file selection screen. The execution tag functions to transmit the selected file.

In the first type, the screen shown in Fig. 3 is displayed on the operation target unit 116. In a case in which the reference button 21 displayed on the screen is selected by the user, the image acquisition process is performed.

In a case in which the transmission button 22 is selected, the upload is started. In other words, the transmission process of the acquired image is started.

A second type is a type in which html and javascript are combined.

In the second type, the file is transmitted on a javascript side in a case in which the file is set.

In the second type, the upload is automatically started in a case in which the file is selected. In a case of a combination of html and javascript, in a case in which the reference button 21 is selected and the file name is set in the file selection tag, the upload is automatically started.

In the second type, the screen shown in Fig. 4 is displayed on the operation target unit 116.

In a case in which the reference button 21 displayed on the screen shown in Fig. 4 is selected by the user, the image acquisition process is performed. Next, the transmission process of the image obtained by the acquisition process is performed.

In the second type, the image transmission process is started even in a case in which an additional instruction is not present from the user.

In the present exemplary embodiment, the direct specification of a type used to execute the job executed by the image processing apparatus 100 cannot be performed. In some software that monitors the browser, the specification of the type used to execute the job cannot be performed.

Therefore, in the present exemplary embodiment, as will be described below, any type of the two types is specified based on the execution status of the executing job. In other words, in the present exemplary embodiment, the execution form in which the job is executed is specified based on the execution status of the executing job.

In the present exemplary embodiment, a series of processes from the image acquisition process to the transmission process are managed in a concept of one job. In the present exemplary embodiment, the state of the job is changed according to the job status. In other words, in the present exemplary embodiment, the information associated with the job is changed according to the status of the job. In the present exemplary embodiment, the content of the information associated with the job is determined based on the execution status of the job.

As a result, the user can know the execution status of the current process and the status of the process performed in the past for each job.

A transition of the state of the job will be described.

In the present exemplary embodiment, the state of the job in the normal state transitions in the following order.
"During the acquisition process", "Acquisition completed", "During transmission", "Transmission completed", and "Completed"
Further, in the present exemplary embodiment, in a case in which the series of processes is forcibly ended before "completed", the state of the job is transitioned to a state of "forcibly ended".

Here, a status in which the job is executed in the image processing apparatus 100 is assumed.

Hereinafter, in the present specification, the job being executed in the image processing apparatus 100 may be referred to as an "executing job".

Here, a case in which the executing job in the image processing apparatus 100 has already been executed is assumed.

Further, a case is assumed in which the execution of a new job different from the executing job is started during the execution of the executing job.

As described above, the user may notice that the job to be executed is incorrect. In this case, the execution of a new job different from the executing job is started. In this case, execution of the new job may be started during the execution of the executing job.

In a case in which a new user operation accompanied by the execution of a job is performed during execution of the executing job, the execution of the new job is started. In the present exemplary embodiment, the "user operation" refers to the selection of the reference button 21 by the user.

In the present exemplary embodiment, the reference button 21 is selected in a case in which a new job is executed. In the middle of the execution of the executing job, the reference button 21 may be newly selected.

In a case in which a new job is executed, any of the reference button 21 in Fig. 3 or the reference button 21 in Fig. 4 is selected.

In a case in which a new job is executed in the first execution form, the reference button 21 in Fig. 3 is selected in the image processing apparatus 100. In a case in which a new job is executed in the second execution form, the reference button 21 in Fig. 4 is selected in the image processing apparatus 100.

Hereinafter, a process in a case in which a new user operation is performed in a case in which a new job is executed before the executing job is ended will be described.

In other words, hereinafter, a process in a case in which the new selection of the reference button 21 is performed before the executing job is ended will be described.

In a case in which a new user operation is performed, the CPU 111A acquires execution status information that is information about the execution status of the executing job. The CPU 111A acquires the execution status information after the acquisition process executed in association with the execution of the executing job is ended.

The CPU 111A stops the executing job or determines the content of the information about the execution result to be associated with the executing job, based on the acquired execution status information.

For example, preferably, the execution status is acquired after a predetermined time has elapsed since the acquisition process of the executing job is ended. For example, based on the execution status, the executing job may be stopped, or the content of the information about the execution result to be associated with the executing job may be determined.

In other words, for example, the execution status may be acquired after a specific time has elapsed since the acquisition process of the executing job is ended. For example, based on the execution status, the executing job may be stopped, or the content of the information about the execution result to be associated with the executing job may be determined.

Although details will be described later, in the second execution form, the transmission process is started after a predetermined specific time has elapsed since the acquisition process is ended.

Therefore, for example, the information about the execution status of the executing job after the specific time has elapsed may be acquired as the execution status information.

The advantage of acquiring the information about the execution status after the specific time has elapsed will be described later.

The CPU 111A acquires the execution status information of the executing job as described above. In other words, the CPU 111A acquires information about the state of the executing job.

The CPU 111A determines whether the status specified by the acquired execution status information is a specific status.

Specifically, the CPU 111A determines whether the status specified by the execution status information is the status in which the transmission process is not started. Specifically, the CPU 111A determines whether the specified status is not "during transmission or transmission completed".

In a case in which the status is not determined to be "during transmission or transmission completed", the CPU 111A stops the execution of the executing job.

In addition, in a case in which the CPU 111A does not determine the status as "during transmission or transmission completed", the state of the executing job is transitioned to "forcibly ended". In other words, in this case, the CPU 111A sets the content of the information to be associated with the executing job to "forcibly ended" indicating that the process is not executed to the end.

In this case, "forcibly ended" is associated with the executing job as information as the execution result.

A case in which the user makes a new selection of the reference button 21 is considered.

In this case, it is assumed that the user intends to discard the executing job and execute the new job.

Therefore, in the present exemplary embodiment, the information indicating the state of the job associated with the executing job is set to "forcibly ended".

Accordingly, in the present exemplary embodiment, the executing job is associated with "forcibly ended" which is information indicating that the process is not performed to the end as the information about the execution result.

The user may check the execution result for the executing job later. In a case in which "forcibly ended" is associated, the user recognizes that the process of the executing job is ended in the middle.

Next, a case in which the execution status specified by the execution status information is "during transmission or transmission completed" will be described.

In this case, the CPU 111A does not set the information indicating the state of the job associated with the executing job to "forcibly ended".

In this case, the CPU 111A finally sets the information indicating the state of the job associated with the executing job to "completed". The CPU 111A sets the information about the execution result, which is finally associated with the executing job, to "completed".

More specifically, in a case in which the execution status specified by the execution status information is "during transmission", the CPU 111Atransitions the information indicating the state of the job to be associated with the executing job to "transmission completed" in a case in which the transmission process is completed. Next, the CPU 111A transitions the information indicating the state of the job to be associated with the executing job to "completed".

In this case, the CPU 111A transitions the information indicating the state of the job associated with the executing job from "during transmission" to "transmission completed", and then transitions the information from "transmission completed" to "completed".

In a case in which the execution status specified by the execution status information is already "transmission completed", the CPU 111Atransitions the information indicating the state of the job associated with the executing job from "transmission completed" to "completed".

In a case in which the execution status specified by the execution status information is "during transmission or transmission completed", the CPU 111A finally associates "completed" with the executing job.

The CPU 111A finally associates the executing job with "completed" which is the information indicating that the process is executed to the end as the information about the execution result of the executing job.

In other words, in this case, the CPU 111A finally sets the content of the information associated with the executing job to "completed", which is the information indicating that the process is executed to the end.

In a case in which the execution status is "during transmission or transmission completed, a case is assumed in which "forcibly ended" is associated with the executing job". In this case, the result of the actual process and the information to be associated with the executing job are not consistent with each other.

In a case in which "forcibly ended" is associated in a case of "during transmission or transmission completed", "forcibly ended" indicating that the process is not completed is associated even though the transmission process is actually performed and the process is substantially completed.

Therefore, in the present exemplary embodiment, in a case in which the execution status is "during transmission or transmission completed", "completed" is finally associated with the executing job.

In the present exemplary embodiment, in a case in which the specified execution status is "during transmission or transmission completed", the executing job is not stopped.

Therefore, in a case in which the specified execution status is "during transmission or transmission completed", the information associated with the executing job is not set to "forcibly ended".

In a case in which the execution status to be specified is "during transmission or transmission completed", "completed" is finally associated with the executing job as described above.

In the present exemplary embodiment, even in a case in which the reference button 21 is newly selected, the executing job is not uniformly treated as being forcibly ended. Even in a case in which the execution of the new job is started, the executing job is not uniformly treated as forcibly ended.

In the present exemplary embodiment, as the execution status information of the executing job, information about the status after the acquisition process is performed is acquired. Accordingly, the specification of whether the executing job is executed in any of the first execution form and the second execution form can be performed.

In the present exemplary embodiment, in a case in which the executing job is executed in the first execution form and the reference button 21 is newly selected, "forcibly ended" is associated with the executing job as information indicating the state of the job.

In other words, in this case, "forcibly ended" is associated with the executing job as the information about the execution result of the executing job.

On the other hand, in a case in which the executing job is executed in the second execution form and the reference button 21 is newly selected, "completed" is finally associated with the executing job.

In other words, in this case, "completed" is associated with the executing job as the information about the execution result of the executing job.

In the present exemplary embodiment, the content of the information about the execution result of the executing job, which is associated with the executing job, is determined based on the execution status information of the executing job.

In the present exemplary embodiment, the content of the information about the execution result associated with the executing job is different depending on whether the executing job is executed in the first execution form or the second execution form.

In the present exemplary embodiment, the CPU 111A causes the information about the execution result, which is associated the executing job, to be different according to the execution status of the executing job after the acquisition process executed in association with the execution of the executing job is ended.

### [Acquisition Timing of Execution Status Information of Executing Job]

Hereinafter, in the present specification, a timing at which the execution status information of the executing job is acquired is referred to as an "acquisition timing".

Examples of the acquisition timing include a timing at which the new user operation is performed. More specifically, a timing at which the reference button 21 is newly selected is an example.

The CPU 111A acquires information about the execution status of the executing job at the acquisition timing as the execution status information.

In a case in which the acquisition timing is set to the timing at which the user operation is performed, the reference button 21 is displayed again after the display of the screen during the acquisition process is ended as described above.

In other words, the reference button 21 is displayed again after the acquisition process of the executing job is ended.

In other words, a screen for receiving a user operation from the user is displayed after the acquisition process of the executing job is ended.

Specifically, the screen shown in Fig. 3 is displayed again after the acquisition process of the executing job is ended. Alternatively, the screen shown in Fig. 4 is displayed again after the acquisition process of the executing job is ended.

In the image processing apparatus 100 in which the job is executed in the first execution form, the screen shown in Fig. 3 is displayed again. In the image processing apparatus 100 in which the job is executed in the second execution form, the screen shown in Fig. 4 is displayed again.

In the present exemplary embodiment, in a case in which the first selection of the reference button 21 is performed, the first acquisition process is started. Thereby, the execution of the executing job is started. In addition, in a case in which the first selection of the reference button 21 is performed, the screen is switched. As a result, the screen during the acquisition process is displayed.

In the present exemplary embodiment, in a case in which the acquisition process of the executing job is ended, the screen is switched again.

As a result, the screen shown in Fig. 3 or the screen shown in Fig. 4 is displayed again.

In a case in which the acquisition process of the executing job is ended, the screen is switched to the screen shown in Fig. 3 or the screen shown in Fig. 4 from the "screen during the acquisition process". In a case in which the acquisition process of the executing job is ended, the screen is switched to a screen for receiving a new user operation.

In the present exemplary embodiment, the execution status of the executing job is acquired in a case in which a new user operation is performed under such a display form. In this case, the specification of an execution form in which the executing job is executed can be performed.

Here, a case is considered where the reference button 21 is displayed at a timing at which the screen during the acquisition process is displayed. Further, at this timing, a case in which the reference button 21 is selected is considered. Further, a case is considered in which the execution status information of the executing job is acquired in a case in which the reference button 21 is selected.

In this case, the specification of the execution form in which the executing job is executed is difficult to be performed.

In this case, the reference button 21 is selected during the acquisition process. In a case in which the reference button 21 is selected during the acquisition process, the execution status information of the executing job is "during the acquisition process". In other words, the state of the executing job is "during the acquisition process". In this case, the specification of the execution form in which the job being executed cannot be performed.

On the other hand, in a case in which the screen on which the reference button 21 is displayed is displayed again after the acquisition process, the defect is less likely to occur. In other words, after the acquisition process, in a state in which the user operation is possible, the defect is less likely to occur.

In the present exemplary embodiment, the state of the operation target unit 116 is set to a state in which the user operation is enabled after the acquisition process of the executing job is ended.

In this case, at the timing at which the user operation is performed, a status is acquired in which the acquisition process of the executing job is ended. In this case, at the timing at which the execution status information is acquired, a status is acquired in which the acquisition process of the executing job is ended.

In this case, at the timing at which the execution status information is acquired, the status is other than "during the acquisition process".

Specifically, in this case, the status of the executing job is either "acquisition completed" or "during transmission or transmission completed".

In this case, based on this status, the specification of whether the executing job is executed in any of the first execution form and the second execution form can be performed.

In a case of "during transmission or transmission completed", it is assumed that the executing job is executed in the second execution form. In a case of "acquisition completed", it is assumed that the executing job is executed in the first execution form.

In a case in which the executing job is executed in the second execution form, a case of "acquisition completed" may be acquired.

Therefore, for example, more preferably, a state in which the user operation is enabled is acquired after a specific time has elapsed since the acquisition process is ended. In other words, for example, the information about the execution status after a specific time has elapsed since the acquisition process is ended may be acquired as the execution status information.

As described above, for example, a more preferable aspect is to acquire a state in which the user operation is enabled after a specific time has elapsed. For example, after the specific time has elapsed since the acquisition process is ended, a state in which the user operation is enabled may be provided.

In a case in which this process is performed, the CPU 111A sets the state in which the user operation is enabled after a specific time has elapsed since the acquisition process is ended.

In other words, the CPU 111A causes the screen shown in Fig. 3 to be displayed again after the specific time has elapsed. Alternatively, the CPU 111A causes the screen shown in Fig. 4 to be displayed again after the specific time has elapsed.

In the second execution form, the transmission process is started after a predetermined specific time has elapsed since the acquisition process is ended. After a specific time has elapsed, in the state in which the user operation is enabled, the accuracy of the specification of which execution form is further improved.

In the state in which the user operation is enabled after the specific time has elapsed, the execution status information of "acquisition completed" is not acquired regardless of the second execution form.

In this case, a case in which the executing job is erroneously specified as being executed in the first execution form does not occur even though the executing job is executed in the second execution form.

The "state in which the user operation is enabled" can also be said as a state in which a reception display for receiving the user operation is displayed. More specifically, it can be said as a state in which the reception display for receiving the user operation is displayed on the operation target unit 116.

The "state in which the user operation is enabled" can be also said as a state in which any one of the screens shown in Figs. 3 and 4 is displayed on the operation target unit 116.

In the present exemplary embodiment, as described above, the reception display is displayed again after the acquisition process of the executing job is ended. Alternatively, the reception display is displayed again after the specific time has elapsed since the acquisition process of the executing job is ended.

As a result, the user operation is suppressed from being performed before the acquisition process is ended. Alternatively, the user operation is suppressed before the specific time has elapsed.

In other words, in a case in which the state is the "during the acquisition process", the user operation is suppressed. Accordingly, in a case in which the state is "during the acquisition process", the execution status information about the executing job is suppressed from being acquired.

In addition, the CPU 111A may perform a covering display of the reception display until the specific time has elapsed. Also in this case, the user operation is disabled to be performed until the specific time has elapsed.

In this case, the CPU 111A erases the covering display after the specific time has elapsed, and sets to a state in which the user operation is enabled.

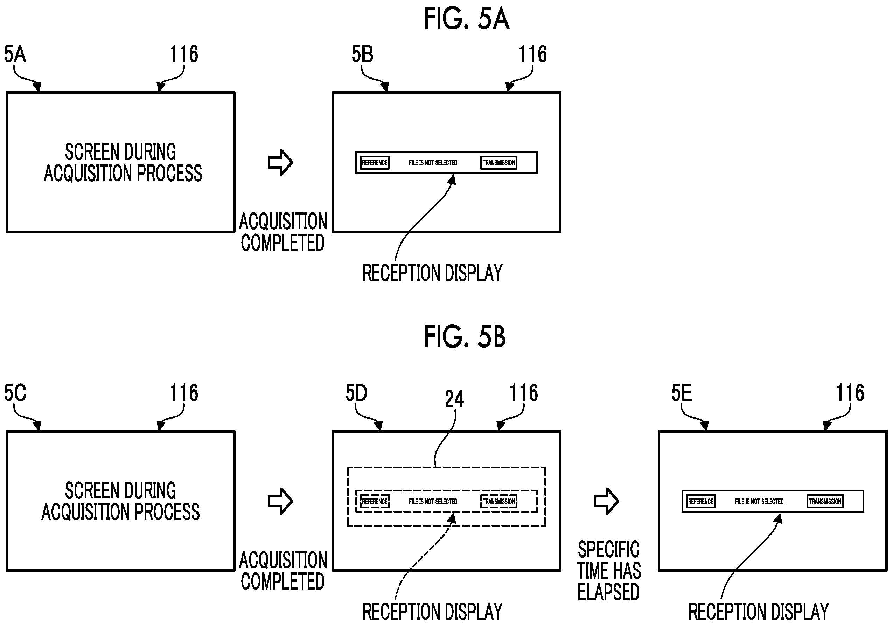

Figs. 5A and 5B are diagrams showing a process in a case in which the covering display is performed.

Fig. 5A is a diagram showing a basic process.

In the present exemplary embodiment, as described above, in a case in which the acquisition process of the executing job is performed, a screen during the acquisition process is displayed as indicated by the reference numeral 5A in Fig. 5A. In a case in which the acquisition process of the executing job is ended, the reception display is displayed again as indicated by reference numeral 5B.

In Figs. 5A and 5B, a case in which the reception display shown in Fig. 3 is displayed as the reception display is shown. In a case in which the execution form is the second execution form, the reception display shown in Fig. 4 is displayed.

Fig. 5B is a diagram showing a process in a case in which a covering display 24 is performed.

Even in a case of performing the covering display 24, first, as shown by the reference numeral 5C in Fig. 5B, the screen during the acquisition process is displayed.

Then, after the acquisition process of the executing job is ended, the reception display is displayed as indicated by reference numeral 5D. Further, in this display example, the covering display 24 of the reception display is performed after the acquisition process of the executing job is ended.

Thereafter, after the specific time has elapsed, the covering display 24 is erased as indicated by reference numeral 5E.

Accordingly, even in this case, a state in which the user operation is not possible to be performed is set until the specific time has elapsed. In addition, in this case, a state in which the user operation is enabled, is set after a specific time has elapsed.

### [Another Processing Example]

In addition, the CPU 111A may acquire the execution status information of the executing job at another timing.

For example, the CPU 111A may acquire the execution status information of the executing job after the acquisition process of the new job is ended. In this case, the CPU 111A acquires information about the execution status of the executing job after the acquisition process of the new job is ended.

More specifically, the CPU 111A acquires the execution status information of the executing job, for example, in a case of generating a file name in association with the end of the acquisition process of the new job.

In a status where the acquisition process of the new job is ended, a status where the elapsed time from the start of the execution of the executing job is long is acquired.

In this case, the elapse of the specific time is more reliable.

In this case, in a case in which the state of the executing job is "acquisition completed", it is more reliable that the execution form of the executing job is the first execution form.

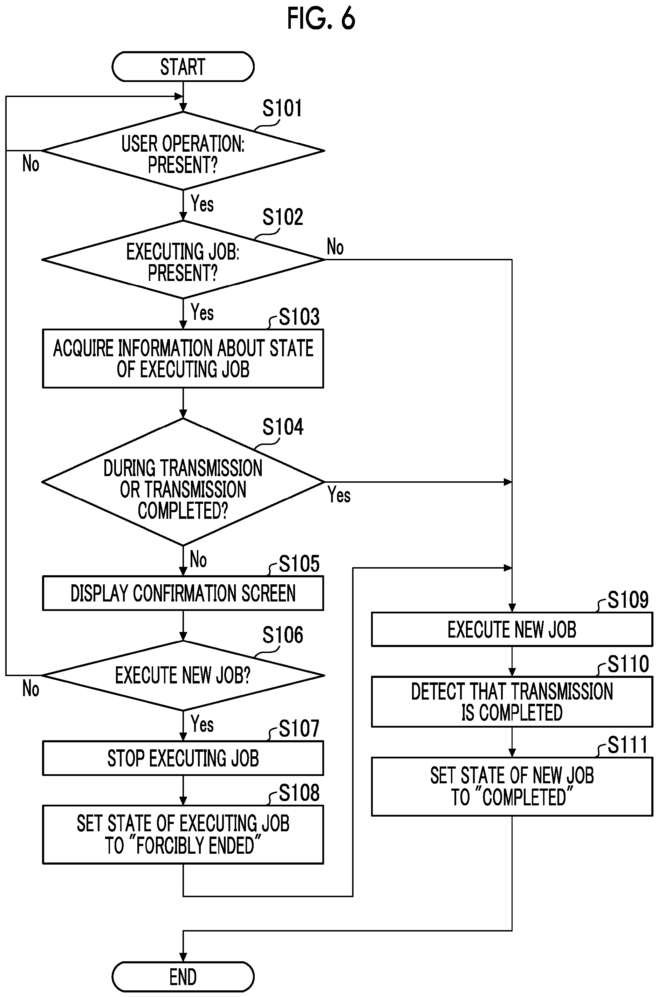

Fig. 6 is a flowchart illustrating an example of a flow of the above-described process.

In this process, first, the CPU 111A determines whether or not the user operation is present (step S101). Specifically, the CPU 111A determines whether the reference button 21 displayed on the operation target unit 116 is selected.

In a case in which it is determined in step S101 that the user operation is present, the process proceeds to the process of step S102. That is, in step S101, in a case in which it is determined that the user operation is present and an instruction to start the execution of the new job is given, the process proceeds to the process of step S102.

In step S102, the CPU 111A determines whether the executing job is present.

In a case in which the CPU 111A determines that the executing job is present, the CPU 111A acquires information about the state of the executing job (step S103). In other words, the CPU 111A acquires the execution status information for the executing job.

Next, the CPU 111A determines whether the state specified by the acquired information about the state is in a specific status.

Specifically, the CPU 111A determines whether the state specified by the information about the state is "during transmission or transmission completed" (step S104).

In a case in which the CPU 111A determines that the status is "during transmission or transmission completed", the CPU 111A proceeds to the process of step S109.

In step S109, the CPU 111A starts the execution of a new job. As a result, the acquisition process is started, and then the transmission process is performed.

Here, in a case in which the new job is executed in the first execution form, the transmission process is performed on the condition of the selection of the transmission button 22.

In a case in which the new job is executed in the second execution form, the transmission process is performed without change.

Then, in a case in which the CPU 111A detects that the state of the new job is "transmission completed" (step S110), the CPU 111A sets the state of the new job to "completed" (step S111).

In a case in which it is determined to be "during transmission or transmission completed" in step S104, the executing job is executed under the second execution form.

In this case, the information about the state of the executing job finally becomes "completed".

On the other hand, in step S104, in a case in which it is not determined to be "during transmission or transmission completed", the process proceeds to the process of step S105.

In step S105, the CPU 111A displays a confirmation screen to the user.

The execution form of the executing job in a case in which it is not determined to be "during transmission or transmission completed" is the first execution form.

In this case, the confirmation screen is displayed. The confirmation screen is displayed on the operation target unit 116.

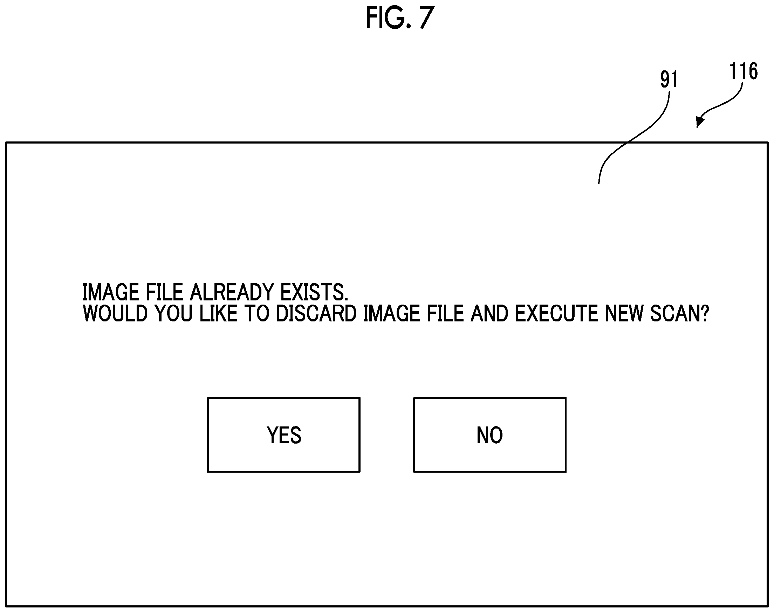

Fig. 7 is a diagram showing a confirmation screen 91.

In step S105, the confirmation screen 91 is displayed.

On the confirmation screen 91, information indicating that the image file already exists is displayed. In addition, on the confirmation screen 91, a display for confirming whether to delete the already obtained image file and perform a new acquisition process is performed. In other words, the display for confirming whether to execute the new job is performed. In the present exemplary embodiment, the user is inquired of whether the operation is erroneous through the confirmation screen 91.

Thereafter, in the present exemplary embodiment, the response from the user is obtained.

In step S106 shown in Fig. 6, the CPU 111A determines whether to execute the new job, based on the response from the user.

In a case in which "Yes" shown in Fig. 7 is selected by the user, the CPU 111A determines to execute a new job. In addition, in a case in which "No" shown in Fig. 7 is selected by the user, the CPU 111A does not determine to execute a new job.

In a case in which the CPU 111A determines to execute the new job in step S106, the CPU 111A stops the executing job (step S107).

In addition, in this case, the CPU 111A sets the state of the executing job to "forcibly ended" (step S108).

In other words, in this case, the CPU 111A changes the information associated with the executing job from "acquisition completed" to "forcibly ended". In other words, in this case, the CPU 111A associates the information indicating that the process is not executed to the end with the executing job.

On the other hand, in a case in which the CPU 111A does not determine to execute the new job in step S106, the CPU 111A performs the process in step S101 and subsequent steps again.

In a case in which the processes in step S101 and subsequent steps are performed again, the screens shown in Fig. 3 or 4 are displayed again. The user performs the operation on the screens shown in Fig. 3 or 4 again, so that the job that corresponds to the executing job is performed again.

After the process of step S108, in the present exemplary embodiment, the processes of step S109 to step S111 are performed.

The processes of step S109 to step S111 are the same as the above.

In step S109, a new job is executed. The new job, the execution of which is started in step S109, is executed in any of the first execution form and the second execution form.

In a case in which it is detected that the new job is "transmission completed" (step S110), the state of the new job is "completed" (step S111).

In the processing example shown in Fig. 6, a new user operation is not possible to be performed until a specific timing even in a case where the execution of the job is started in any execution form. Specifically, in this processing example, a new user operation is not possible to be performed until the specific time has elapsed from the end of the acquisition process.

More specifically, in this processing example shown in Fig. 6, a new user operation is not possible to be performed until a specific timing after it is determined that the user operation is present in step S101.

Specifically, a new user operation is not possible to be performed until the specific time has elapsed since the acquisition process of the job started in association with the user operation detected in step S101 is ended.

Accordingly, the user operation for the new job is suppressed until the specific time has elapsed.

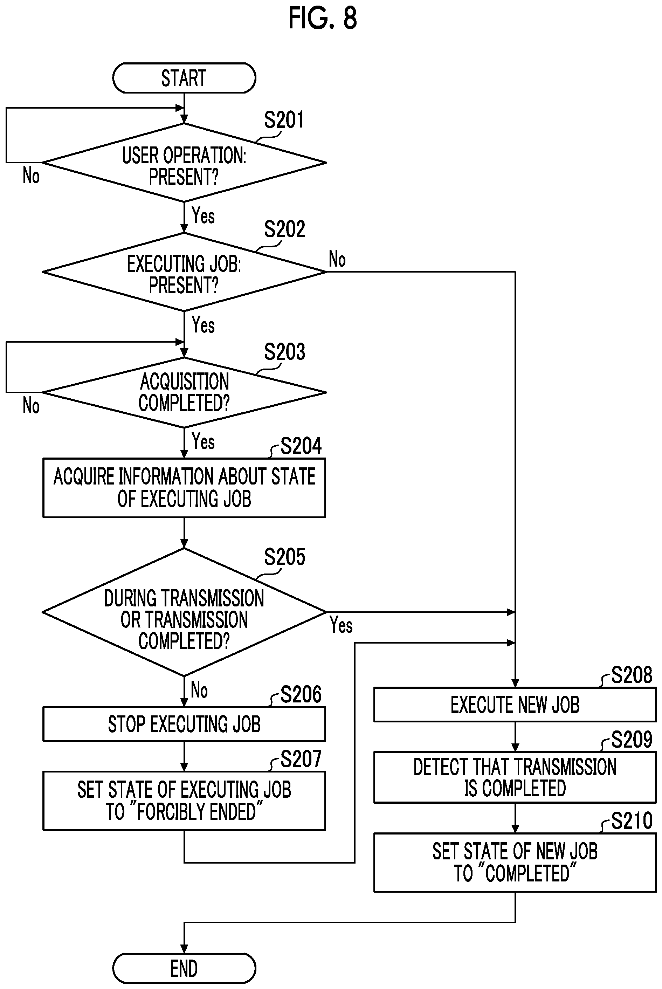

Fig. 8 is a flowchart showing an example of a flow of another process.

Here, a processing example in a case in which the execution status information is acquired when the acquisition process of the new job is ended will be described.

Even in this process, first, the CPU 111A determines whether or not the user operation is present (step S201). In a case in which it is determined that the user operation is present in step S201, the process proceeds to step S202. Here, in step S201, in a case in which it is determined that the user operation is present and the instruction to start the execution of the new job is given, the process proceeds to the process of step S202.

In step S202, the CPU 111A determines whether an executing job is present.

In a case in which it is determined that an executing job is present in step S202, the process proceeds to the process of step S203.

In step S203, the CPU 111A determines whether or not the acquisition process of the new job started in association with the user operation has been ended. In other words, in step S203, the CPU 111A determines whether or not the state of the new job is "acquisition completed".

In a case in which it is determined to be "acquisition completed", the CPU 111A acquires information about the state of the executing job (step S204). In other words, the CPU 111A acquires the execution status information for the executing job.

Thereafter, the process proceeds to the process of step S205.

In addition, the information about the state of the executing job may be acquired at a timing at which the file name of the new job is generated.

In the present exemplary embodiment, the file name is generated after the acquisition process of the new job is ended. The information about the state of the executing job may be acquired on the condition that the file name is generated.

In step S205, the CPU 111A determines whether the state is "during transmission or transmission completed".

As described above, the CPU 111A acquires the information about the state of the executing job in step S204.

In step S205, it is determined whether the state specified by the information about the state is "during transmission or transmission completed".

In a case in which it is determined that the transmission is during transmission or transmission completed in step S205, the process proceeds to the processes of step S208 to step S210. As a result, the process for the new job is executed.

The processes of step S208 to step S210 is the same as the processes of step S109 to step S111. Here, the description of the processes of step S208 to step S210 will be omitted.

In a case in which it is determined to be during transmission or transmission completed, in step S205, as in the above, "completed" is finally associated with the executing job as the information about the state.

In a case in which it is not determined to be "during transmission or transmission completed" in step S205, the process proceeds to the process of step S206.

In step S206, the CPU 111A stops the executing job.

In addition, in this case, the CPU 111A sets the state of the executing job to "forcibly ended" (step S207).

In other words, in this case, the CPU 111A changes the information associated with the executing job from "acquisition completed" to "forcibly ended".

In other words, in this case, the CPU 111A associates the information indicating that the process is not executed to the end with the executing job.

After the process of step S207, in the present exemplary embodiment, the processes of step S208 to step S210 are performed. As a result, the process for the new job is executed.

The processes of step S208 to step S210 are the same as the processes of step S109 to step S111. Here, the description of the processes of step S208 to step S210 will be omitted.

In addition, in this processing example, even in a case in which it is not determined that an executing job is present in step S202, the processes of step S208 to step S210 are executed. Thus, in this case as well, the process for the new job is executed.

As described above, in the processing example shown in Fig. 6, the user operation is disabled to be performed until the specific time has elapsed. On the other hand, in the processing shown in Fig. 8, this process of disabling the user operation is not performed.

In the processing example shown in Fig. 8, the execution status information is acquired not at a timing at which the user operation is present but at a timing after this timing.

In this case, a status in which the execution status information "acquisition completed" is obtained is less likely to occur even though the job is executed in the second execution form.

In this case, the specification of the execution form in which the job is performed can be performed without performing the process of disabling the user operation until the specific time has elapsed.

The process of disabling the user operation is not excluded. In the processing example shown in Fig. 8, the process of disabling the user operation may be performed.

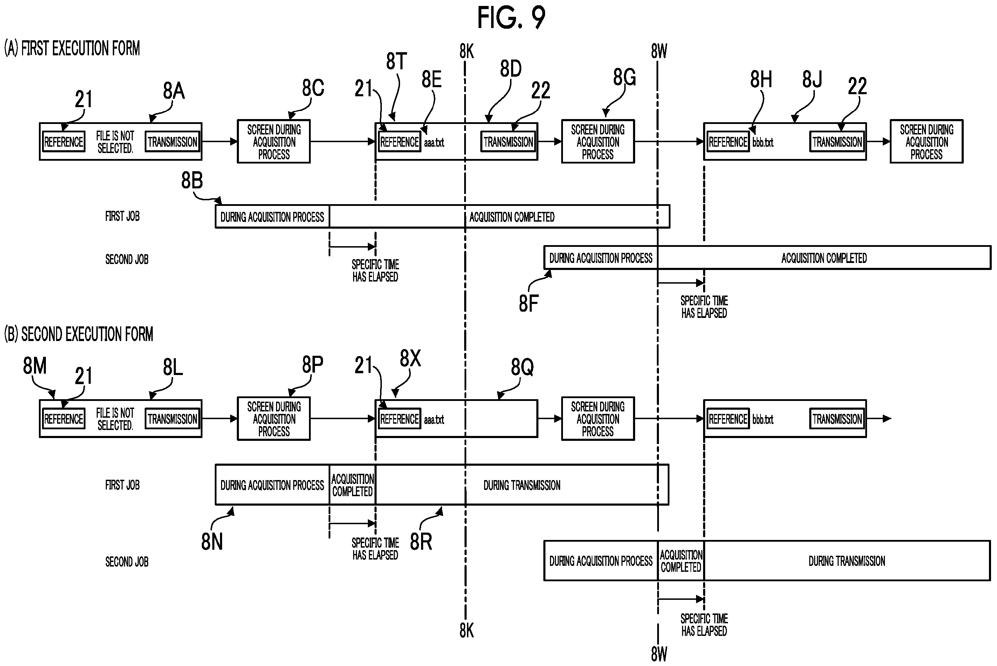

(A) and (B) of Fig. 9 are diagrams showing the first execution form and the second execution form.

(A) of Fig. 9 is a diagram showing the first execution form. (B) of Fig. 9 is a diagram showing the second execution form.

In (A) of Fig. 9, a processing example in a case in which the confirmation screen 91 (see Fig. 7) is not displayed is shown. The display of the confirmation screen 91 is not necessary. (A) of Fig. 9 shows a processing example in a case in which the confirmation screen 91 is not displayed.

Further, in (A) and (B) of Fig. 9, the same as described above, a processing example in a case in which the reference button 21 is displayed after a specific time has elapsed since the acquisition process is ended will be described.

As described above, the first execution form shown in (A) of Fig. 9 is an execution form in which the transmission process is started on the condition of the additional instruction from the user. The first execution form is an execution form in which the transmission process is started on a condition that the additional instruction is given after the acquisition process.

In a case in which the process is started in the first execution form, as shown in (A) of Fig. 9, first, a display indicated by the reference numeral 8A is performed.

In a case in which the reference button 21 is selected, the acquisition process is started as indicated by reference numeral 8B. In other words, in a case in which the user operation is performed, the acquisition process is started.

In addition, in a case in which the reference button 21 is selected, a display indicating that the acquisition process is performed is performed on the operation target unit 116 as indicated by a reference numeral 8C. In other words, the screen during the acquisition process is displayed on the operation target unit 116.

Then, in a state in which the acquisition process is ended is set, the display indicated by reference numeral 8D is performed. More specifically, in this example, in a state in which the above-described specific time has elapsed since the acquisition process is ended is set, the display indicated by the reference numeral 8D is performed.

In the display indicated by the reference numeral 8D, the reference button 21 and the transmission button 22 are displayed again. Further, in the display indicated by the reference numeral 8D, as indicated by the reference numeral 8E, the generated file name is displayed.

In the processing example, the reference button 21 is pressed without selecting the transmission button 22, in the display indicated by the reference numeral 8D.

In this case, as indicated by the reference numeral 8F, the execution of the new job is started. In response to this, the acquisition process is started.

Further, in this case, as indicated by reference numeral 8G, a display indicating that the acquisition process is performed is performed on the operation target unit 116. In other words, the screen during the acquisition process is displayed.

Thereafter, a file name is generated, and the new file name is displayed on the operation target unit 116 as indicated by reference numeral 8H.

Even in this case, as in the above, the display indicated by reference numeral 8J is performed after the specific time has elapsed since the acquisition process of the new job is ended. Then, in a case in which the transmission button 22 included in the display indicated by the reference numeral 8J is pressed, the transmission process is started.

In the processing example shown in (A) of Fig. 9, a state is set in which a first job, which is an example of the executing job, is not executed until the end. In this case, the execution of the first job is stopped. Further, "forcibly ended" is associated with the first job as the information indicating the execution result.

In this processing example, for example, the execution status information of the first job is acquired at a timing indicated by the reference numeral 8K. In this case, the execution status of the first job is "acquisition completed". In this case, the execution of the first job is stopped. In this case, "forcibly ended" is associated with the first job.

In this case, the content of the process matches the content of the information to be associated.

Next, a second execution form shown in (B) of Fig. 9 will be described.

As described above, the second execution form is an execution form in which the transmission process is started even though an instruction from the user is not present.

In a case in which the job is executed in the second execution form, as shown in (B) of Fig. 9, first, the display indicated by the reference numeral 8L is performed.

In a case in which the reference button 21 indicated by the reference numeral 8M is pressed, the acquisition process of the first job is started as indicated by the reference numeral 8N. In addition, as indicated by reference numeral 8P, a display indicating that the acquisition process is performed is performed on the operation target unit 116. That is, the screen during the acquisition process is displayed.

Then, in a state in which the acquisition process is ended, the display indicated by reference numeral 8Q is performed.

In this case as well, the display indicated by reference numeral 8Q is performed after the specific time has elapsed since the acquisition process is ended.

In the display indicated by the reference numeral 8Q, the reference button 21 is displayed again, and a state is set in which a new acquisition process can be performed. In other words, a state in which the new job can be executed is set.

In the second execution form, the process of the job, which has already started to be executed, is continued even after the display indicated by the reference numeral 8Q is performed. Accordingly, in this process, as indicated by reference numeral 8R, the transmission process is performed.

In the second execution form, unlike the first execution form, the transmission process is performed regardless of the presence or absence of the instruction from the user.

In the second execution form, the executed job is executed to the end without being canceled.

In this case, in a case in which "forcibly ended" is associated with this job, the content of the process and the content of the information to be associated are not consistent with each other.

Therefore, in the present exemplary embodiment, as described above, the information "completed" is associated with the job executed in the second execution form, as the information indicating the execution result after the transmission process of the job is completed.

In a case in which the reference button 21 displayed again is selected, the association of the "forcibly ended" may be considered in the same manner as in the first execution form.

Specifically, in a case in which the reference button 21 displayed by the display indicated by the reference numeral 8Q is selected, the association of the "forcibly ended" may be considered.

In this case, the content of the process and the content of the information to be associated are not consistent with each other.

Therefore, in the second execution form, as described above, the information "completed" is associated with the executed job.

In the first execution form, a case is assumed in which the reference button 21 indicated by the reference numeral 8T is selected and a new job is started.

In this case, the first job performed in advance is stopped and is ended in the middle. In this case, even in a case in which "forcibly ended" is associated with the first job, the inconsistency does not occur.

On the other hand, in the second execution form, the process is executed to the end regardless of the intention of the user. In this case, in a case in which "forcibly ended" is associated with the first job performed in advance, the inconsistency occurs.

Therefore, the information "completed" is associated with the first job executed under the second execution form.

In the present exemplary embodiment, the execution status information, which is information about the execution status of the executing job, is acquired. More specifically, the execution status information, which is information about the execution status after the acquisition process is ended, is acquired. In other words, in the present exemplary embodiment, the information on the state of the job is acquired after the acquisition process is ended.

In the present exemplary embodiment, the specification of the execution form in which the job is executed can be performed by acquiring the execution status information.

Specifically, in the present exemplary embodiment, for example, the execution status information is acquired at the timing indicated by the reference numeral 8K.

In this case, in the case of the first execution form, the status specified by the execution status information is "acquisition completed". In the case of the second execution form, the status specified by the execution status information is "during transmission".

In this case, the specification of the execution form in which the job is executed can be performed, based on the execution status information.

The new selection of the reference button 21 by the user is performed, for example, at a timing indicated by the reference numeral 8K. At this timing, the status of the executing job is not "during the acquisition process".

Specifically, the status of the executing job is either "acquisition completed" or "during transmission or transmission completed".

In other words, the status of the first job is either "acquisition completed" or "during transmission or transmission completed".

In this case, the specification of an execution form in which the executing job is executed can be performed.

In addition, in the present exemplary embodiment, as described above, the execution status information is acquired at the timing at which the acquisition process of the new job is ended. In this case, the execution status information is acquired at the timing indicated by the reference numeral 8W in Fig. 9.

Also in this case, the specification of the execution form in which the job is executed can be performed.

Even at a timing at which the acquisition process of the new job is ended, the execution status of the first job may still be "during transmission".

A case in which the capacity of the image file obtained by the acquisition process is large is also assumed. In this case, the status may still be "during transmission" even at the timing at which the acquisition process of the new job is ended.

### [Description of Update Process]

In addition, in the present exemplary embodiment, the update process of the screen displayed on the operation target unit 116 can be performed.

In the present exemplary embodiment, the user can perform the update process of the screen by performing an operation on the operation target unit 116.

In the present exemplary embodiment, in a case in which the update process is performed after the acquisition process of the executing job is ended, the file name displayed on the operation target unit 116 is erased.

More specifically, in a case in which the update process is performed after the acquisition process of the first job is ended, the file name is erased.

In addition, in the present exemplary embodiment, in a case in which the update process is performed after the acquisition process of the first job is ended, the execution of the first job is stopped.

Here, for example, a case in which the update process is performed after the acquisition process of the executing job is ended is assumed. Specifically, for example, a case in which the update process is performed at the timing indicated by the reference numeral 8K in Fig. 9 is assumed.

Here, a case is assumed in which the update process is performed in a state in which the new job has not been executed yet. In other words, a case is assumed in which the update process is performed in a state in which the reference button 21 indicated by the reference numeral 8T or the reference numeral 8X is not yet newly selected.

In other words, a case is assumed in which the update process of the screen on which the information about the executing job is displayed is performed in a state in which the user operation performed in a case in which the new job is executed is not performed yet.

More specifically, a case is assumed in which the update button (not shown) displayed on the operation target unit 116 is selected in a state in which the reference button 21 is not yet newly selected.

In a case in which the update button is selected, the file name displayed so far is erased in the operation target unit 116 after the update. In addition, in a case in which the update button is selected, the execution of the executing job is stopped.

In this case, in the present exemplary embodiment, the CPU 111A acquires the execution status information after the acquisition process of the executing job, as the same as in the above description.

Here, as the same as in the above description, a case in which the execution status information is acquired after the above specific time has elapsed will be described.

The CPU 111A also acquires the execution status information of the executing job in a case in which the update button is selected. In this case as well, the CPU 111A acquires the execution status information which is the information about the execution status after the acquisition process of the executing job is ended. More specifically, here, the CPU 111A acquires the execution status information which is the information about the execution status after the specific time has elapsed.

The CPU 111A determines the content of the information about the execution result of the executing job, which is to be associated with the executing job, based on the acquired execution status information.

The CPU 111A acquires the execution status of the executing job after the acquisition process executed in association with the execution of the executing job is ended. The CPU 111A causes the information about the execution result, which is associated with the executing job, to be different according to the acquired execution status.

In a case in which the status specified by the acquired execution status information is "acquisition completed", the CPU 111A changes the information about the state from "acquisition completed" to "forcibly ended". The CPU 111A associates the "forcibly ended" with the executing job.

In other words, in this case, the CPU 111A associates the executing job with the information indicating that the process is not executed to the end as the information about the execution result of the executing job.

On the other hand, in a case in which the status specified by the execution status information is "during transmission or transmission completed", the CPU 111A associates "completed" with the executing job.

Specifically, the CPU 111A associates "completed" with the executing job after the transmission process in the executing job is completed.

In other words, in this case, the CPU 111A associates the executing job with the information indicating that the process is executed to the end as the information about the execution result of the executing job.

Even in a case in which the update process is performed and the file name is erased, the process may be executed to the end. Specifically, in the second execution form, in a case in which the job is executed, the process is executed to the end.

Therefore, as described above, in a case in which the specified status is "during transmission or transmission completed", "completed" is finally associated with the executing job. That is, in the second execution form, in a case in which the job is executed, "completed" is associated with the executing job.

On the other hand, in the first execution form, in a case in which the job is executed and the update process is performed, as described above, "forcibly ended" is associated with the executing job. In addition, in this case, the execution of the executing job is stopped.

### [Others]

In the above description, the image acquisition process by the so-called scanning is described as an example of the acquisition process.

Examples of the acquisition process include a process of reading an image from the information storage apparatus 112 in addition thereto.

The acquisition process is not limited to the process including the reading of the image. The acquisition process also includes a process of reading an image from the information storage apparatus 112 to acquire the image.

The acquisition process includes a process in which the image reading process is not included.

### (Supplementary Note)

(((1))) An image processing apparatus comprising:
   an acquisition unit that performs an acquisition process of an image;
   a transmission unit that performs a transmission process of the image acquired by the acquisition unit; and
   a processor configured to:
      in a case in which a user operation that is an operation of a user, which is performed in a case in which a new job different from an executing job that is a job being executed in the image processing apparatus is executed, is present, stop the executing job according to an execution status of the executing job.
(((2))) The image processing apparatus according to (((1))),
   wherein information about an execution result of the executing job is associated with the executing job, and
   the processor is configured to:
      determine content of the information about the execution result associated with the executing job based on the execution status of the executing job after the acquisition process executed in association with the execution of the executing job is ended.
(((3))) The image processing apparatus according to (((2))), wherein the processor is configured to:
   in a case in which the execution status is a status in which the transmission process is not started, associate information indicating that the process is not executed to the end with the executing job.
(((4))) The image processing apparatus according to (((2))) or (((3))), wherein the processor is configured to:
   in a case in which the execution status is a status in which the transmission process is being executed or a status in which the transmission process is ended, associate information indicating that the process is executed to the end with the executing job.
(((5))) The image processing apparatus according to any one of (((2))) to (((4))), wherein the processor is configured to:
   acquire, as the execution status, the execution status of the executing job after a predetermined time has elapsed since the acquisition process of the executing job is ended.
(((6))) The image processing apparatus according to (((5))),
   wherein the image processing apparatus is capable of executing a job in at least two execution forms including a first execution form in which the transmission process is started under a condition that an instruction from the user is present after the acquisition process and a second execution form in which the transmission process is started even though the instruction is not present,
   in the second execution form, the transmission process is started after a predetermined specific time has elapsed since the acquisition process is ended, and
   the processor is configured to:
      acquire, as the execution status, the execution status of the executing job after the specific time has elapsed since the acquisition process of the executing job is ended.
(((7))) The image processing apparatus according to (((2))), wherein the processor is configured to:
   acquire, as the execution status, the execution status of the executing job in a case in which the user operation performed in a case in which the new job is executed is present, and
   set a state of an operation target unit operated in a case in which the user performs the user operation to a state in which the user operation is enabled, after the acquisition process of the executing job executed by the image processing apparatus is ended.
(((8))) The image processing apparatus according to (((7))),
   wherein the image processing apparatus is capable of executing a job in at least two execution forms including a first execution form in which the transmission process is started under a condition that an instruction from the user is present after the acquisition process and a second execution form in which the transmission process is started even though the instruction is not present,
   in the second execution form, the transmission process is started after a predetermined specific time has elapsed since the acquisition process is ended, and
   the processor is configured to:
      set the state in which the user operation is enabled after the specific time has elapsed since the acquisition process of the executing job executed by the image processing apparatus is ended.
(((9))) The image processing apparatus according to (((8))),
   wherein reception display for receiving the user operation is performed on the operation target unit after the acquisition process of the executing job executed by the image processing apparatus is ended, and
   the processor is configured to:
      perform a covering display of the reception display to disable the user operation, until the specific time has elapsed since the acquisition process of the executing job executed by the image processing apparatus is ended, and
      erase the covering display, and set the state in which the user operation is enabled, after the specific time has elapsed.
(((10))) The image processing apparatus according to (((2))), wherein the processor is configured to:
   acquire, as the execution status, the execution status of the executing job after the acquisition process of the new job is ended.
(((11))) The image processing apparatus according to (((2))), wherein the processor is configured to:
   in a case in which an update process of a screen, on which information about the executing job is displayed, is performed in a state in which the user operation performed in a case in which the new job is executed is not performed yet, determine content of the information associated with the executing job based on the execution status of the executing job after the acquisition process executed in association with the execution of the executing job is ended.
(((12))) The image processing apparatus according to (((2))),
   wherein the image processing apparatus is capable of executing a job in at least two execution forms including a first execution form in which the transmission process is started under a condition that an instruction from the user is present after the acquisition process and a second execution form in which the transmission process is started even though the instruction is not present.
(((13))) The image processing apparatus according to (((1))),
   wherein information about an execution result of the executing job is associated with the executing job, and
   the processor is configured to:
      cause the information about the execution result, which is associated with the executing job, to be different according to the execution status of the executing job after the acquisition process executed in association with the execution of the executing job is ended.
(((14))) An image processing apparatus comprising:
   an acquisition unit that performs an acquisition process of an image;
   a transmission unit that performs a transmission process of the image acquired by the acquisition unit; and
   a processor configured to:
      in a case in which a user operation that is an operation of a user, which is performed in a case in which a new job different from an executing job that is a job being executed in the image processing apparatus is executed, is present, determine content of information about an execution result of the executing job, the information being associated with the executing job, based on an execution status of the executing job, and
      set a state of an operation target unit operated in a case in which the user performs the user operation to a state in which the user operation is enabled after the acquisition process of the executing job is ended.
(((15))) The image processing apparatus according to (((14))),
   wherein the image processing apparatus is capable of executing a job in at least two execution forms including a first execution form in which the transmission process is started under a condition that an instruction from the user is present after the acquisition process and a second execution form in which the transmission process is started even though the instruction is not present,
   in the second execution form, the transmission process is started after a predetermined specific time has elapsed since the acquisition process is ended, and
   the processor is configured to:
      set the state in which the user operation is enabled after the specific time has elapsed since the acquisition process of the executing job executed by the image processing apparatus is ended.
(((16))) An information processing apparatus comprising:
   a processor configured to:
   in a case in which a user operation that is an operation of a user, which is performed in a case in which a new job different from an executing job that is a job being executed in an apparatus capable of executing an acquisition process of an image and a transmission process of the acquired image is executed, is present, stop the executing job according to an execution status of the executing job.
(((17))) An information processing apparatus comprising:
   a processor configured to:
   in a case in which a user operation that is an operation of a user, which is performed in a case in which a new job different from an executing job that is a job being executed in an apparatus capable of executing an acquisition process of an image and a transmission process of the acquired image is executed, is present, determine content of information about an execution result of the executing job, the information being associated with the executing job, based on an execution status of the executing job; and
   set a state of an operation target unit operated in a case in which the user performs the user operation to a state in which the user operation is enabled, after the acquisition process of the executing job is ended.
(((18))) A program causing a computer to realize a function comprising:
   stopping, in a case in which a user operation that is an operation of a user, which is performed in a case in which a new job different from an executing job that is a job being executed in an apparatus capable of executing an acquisition process of an image and a transmission process of the acquired image is executed, is present, the executing job according to an execution status of the executing job.
(((19))) A program causing a computer to realize a function comprising:
   determining, in a case in which a user operation that is an operation of a user, which is performed in a case in which a new job different from an executing job that is a job being executed in an apparatus capable of executing an acquisition process of an image and a transmission process of the acquired image is executed, is present, content of information about an execution result of the executing job, the information being associated with the executing job, based on an execution status of the executing job; and
   setting a state of an operation target unit operated in a case in which the user performs the user operation to a state in which the user operation is enabled, after the acquisition process of the executing job is ended.

With the image processing system according to (((1))), in a case in which a new job is received during execution of the job, it is possible to stop the executing job according to the execution status of the executing job.

With the image processing system according to (((2))), it is possible to reduce the likelihood of inconsistencies between a content of job execution and a content of information associated with the job, compared to a case where the information indicating that the process is not executed to the end is uniformly associated with the executing job as the information on the execution result of the executing job.

With the image processing system according to (((3))), it is possible to associate the job for which the processing has not been executed to the end with the information indicating that the process is not executed to the end.

With the image processing system according to (((4))), it is possible to associate the job for which the processing has been executed with the information indicating that the process is executed to the end.

With the image processing system according to (((5))), it is possible to reduce the likelihood of the inconsistencies between the content of the job execution and the content of the information associated with the job, compared to a case where the execution status of the executing job is acquired before the acquisition process of the executing job is ended.

With the image processing system according to (((6))), it is possible to reduce the likelihood of the inconsistencies between the content of the job execution and the content of the information associated with the job, compared to a case where the execution status of the executing job is acquired before the acquisition process of the executing job is ended.

With the image processing system according to (((7))), accuracy of the information associated with the job can be improved, compared to a case where a state in which the user operation is enabled before an acquisition process of an executing job executed in an image processing apparatus is ended.

With the image processing system according to (((8))), the accuracy of the information associated with the job can be improved, compared to a case where a state in which the user operation is enabled before an acquisition process of an executing job executed in an image processing apparatus is ended.

With the image processing system according to (((9))), it is possible to prevent a user operation from being performed before a specific time has elapsed.

With the image processing system according to (((10))), the accuracy of the information associated with the job can be improved, compared to a case where the execution status of the execution job is acquired before an acquisition process for a new job is ended.

With the image processing system according to (((11))), it is possible to reduce the likelihood of inconsistencies between the content of job execution and the content of information associated with the job, compared to a case where the executing job is uniformly associated with the information indicating that the process is not executed to the end as the information on the execution result in a case where an update process of a screen is performed.

With the image processing system according to (((12))), it is possible to reduce the likelihood of inconsistencies between the content of job execution and the content of information associated with the job, compared to a case where the job executed on the image processing apparatus capable of executing in at least two execution forms including a first execution form in which the transmission process is started under a condition that an instruction from a user is present after the acquisition process and a second execution form in which the transmission process is started even though the instruction is not present is uniformly associated with information indicating that the process is not executed to the end.

With the image processing system according to (((13))), it is possible to reduce the likelihood of inconsistencies between the content of job execution and the content of information associated with the job, compared to a case where the information indicating that the process is not executed to the end is uniformly associated with the executing job as information on the execution result of the executing job.

With the image processing system according to (((14))), the accuracy of the information associated with the job can be improved, compared to a case where a state in which the user operation is enabled before an acquisition process of an executing job executed in an image processing apparatus is ended.

With the image processing system according to (((15))), the accuracy of the information associated with the job can be improved, compared to a case where a state in which the user operation is enabled before an acquisition process of an executing job executed in an image processing apparatus is ended.

With the information processing system according to (((16))), in a case in which the new job is received during the execution of the job, it is possible to stop the executing job according to the execution status of the executing job.

With the information processing system according to (((17))), the accuracy of the information associated with the job can be improved, compared to a case where a state in which the user operation is enabled before an acquisition process of an executing job executed in an image processing apparatus is ended.

With the program according to (((18))), in a case in which the new job is received during the execution of the job, it is possible to stop the executing job according to the execution status of the executing job.

With the program according to (((19))), accuracy of the information associated with the job can be improved, compared to a case where a state in which the user operation is enabled before the acquisition process of the executing job is ended.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

21: reference button
22: transmission button
24: covering display
100: image processing apparatus
111a: CPU
113: transmission and reception apparatus
115: image reading apparatus
116: operation target unit

## Claims

1. An image processing apparatus comprising:
an acquisition unit that performs an acquisition process of an image;
a transmission unit that performs a transmission process of the image acquired by the acquisition unit; and
a processor configured to:
in a case in which a user operation that is an operation of a user, which is performed in a case in which a new job different from an executing job that is a job being executed in the image processing apparatus is executed, is present, stop the executing job according to an execution status of the executing job.

2. The image processing apparatus according to claim 1,
wherein information about an execution result of the executing job is associated with the executing job, and
the processor is configured to:
determine content of the information about the execution result associated with the executing job based on the execution status of the executing job after the acquisition process executed in association with the execution of the executing job is ended.

3. The image processing apparatus according to claim 2, wherein the processor is configured to:
in a case in which the execution status is a status in which the transmission process is not started, associate information indicating that the process is not executed to the end with the executing job.

4. The image processing apparatus according to claim 2 or 3, wherein the processor is configured to:
in a case in which the execution status is a status in which the transmission process is being executed or a status in which the transmission process is ended, associate information indicating that the process is executed to the end with the executing job.

5. The image processing apparatus according to any one of claims 2 to 4, wherein the processor is configured to:
acquire, as the execution status, the execution status of the executing job after a predetermined time has elapsed since the acquisition process of the executing job is ended.

6. The image processing apparatus according to claim 5,
wherein the image processing apparatus is capable of executing a job in at least two execution forms including a first execution form in which the transmission process is started under a condition that an instruction from the user is present after the acquisition process and a second execution form in which the transmission process is started even though the instruction is not present,
in the second execution form, the transmission process is started after a predetermined specific time has elapsed since the acquisition process is ended, and
the processor is configured to:
acquire, as the execution status, the execution status of the executing job after the specific time has elapsed since the acquisition process of the executing job is ended.

7. The image processing apparatus according to claim 2, wherein the processor is configured to:
acquire, as the execution status, the execution status of the executing job in a case in which the user operation performed in a case in which the new job is executed is present, and
set a state of an operation target unit operated in a case in which the user performs the user operation to a state in which the user operation is enabled, after the acquisition process of the executing job executed by the image processing apparatus is ended.

8. The image processing apparatus according to claim 7,
wherein the image processing apparatus is capable of executing a job in at least two execution forms including a first execution form in which the transmission process is started under a condition that an instruction from the user is present after the acquisition process and a second execution form in which the transmission process is started even though the instruction is not present,
in the second execution form, the transmission process is started after a predetermined specific time has elapsed since the acquisition process is ended, and
the processor is configured to:
set the state in which the user operation is enabled after the specific time has elapsed since the acquisition process of the executing job executed by the image processing apparatus is ended.

9. The image processing apparatus according to claim 8,
wherein reception display for receiving the user operation is performed on the operation target unit after the acquisition process of the executing job executed by the image processing apparatus is ended, and
the processor is configured to:
perform a covering display of the reception display to disable the user operation, until the specific time has elapsed since the acquisition process of the executing job executed by the image processing apparatus is ended, and
erase the covering display, and set the state in which the user operation is enabled, after the specific time has elapsed.

10. The image processing apparatus according to claim 2, wherein the processor is configured to:
acquire, as the execution status, the execution status of the executing job after the acquisition process of the new job is ended.

11. The image processing apparatus according to claim 2, wherein the processor is configured to:
in a case in which an update process of a screen, on which information about the executing job is displayed, is performed in a state in which the user operation performed in a case in which the new job is executed is not performed yet, determine content of the information associated with the executing job based on the execution status of the executing job after the acquisition process executed in association with the execution of the executing job is ended.

12. The image processing apparatus according to claim 2,
wherein the image processing apparatus is capable of executing a job in at least two execution forms including a first execution form in which the transmission process is started under a condition that an instruction from the user is present after the acquisition process and a second execution form in which the transmission process is started even though the instruction is not present.

13. The image processing apparatus according to claim 1,
wherein information about an execution result of the executing job is associated with the executing job, and
the processor is configured to:
cause the information about the execution result, which is associated with the executing job, to be different according to the execution status of the executing job after the acquisition process executed in association with the execution of the executing job is ended.

14. An image processing apparatus comprising:
an acquisition unit that performs an acquisition process of an image;
a transmission unit that performs a transmission process of the image acquired by the acquisition unit; and
a processor configured to:
in a case in which a user operation that is an operation of a user, which is performed in a case in which a new job different from an executing job that is a job being executed in the image processing apparatus is executed, is present, determine content of information about an execution result of the executing job, the information being associated with the executing job, based on an execution status of the executing job, and
set a state of an operation target unit operated in a case in which the user performs the user operation to a state in which the user operation is enabled after the acquisition process of the executing job is ended.

15. The image processing apparatus according to claim 14,
wherein the image processing apparatus is capable of executing a job in at least two execution forms including a first execution form in which the transmission process is started under a condition that an instruction from the user is present after the acquisition process and a second execution form in which the transmission process is started even though the instruction is not present,
in the second execution form, the transmission process is started after a predetermined specific time has elapsed since the acquisition process is ended, and
the processor is configured to:
set the state in which the user operation is enabled after the specific time has elapsed since the acquisition process of the executing job executed by the image processing apparatus is ended.

16. An information processing apparatus comprising:
a processor configured to:
in a case in which a user operation that is an operation of a user, which is performed in a case in which a new job different from an executing job that is a job being executed in an apparatus capable of executing an acquisition process of an image and a transmission process of the acquired image is executed, is present, stop the executing job according to an execution status of the executing job.

17. An information processing apparatus comprising:
a processor configured to:
in a case in which a user operation that is an operation of a user, which is performed in a case in which a new job different from an executing job that is a job being executed in an apparatus capable of executing an acquisition process of an image and a transmission process of the acquired image is executed, is present, determine content of information about an execution result of the executing job, the information being associated with the executing job, based on an execution status of the executing job; and
set a state of an operation target unit operated in a case in which the user performs the user operation to a state in which the user operation is enabled, after the acquisition process of the executing job is ended.

18. An information processing method comprising:
stopping, in a case in which a user operation that is an operation of a user, which is performed in a case in which a new job different from an executing job that is a job being executed in an apparatus capable of executing an acquisition process of an image and a transmission process of the acquired image is executed, is present, the executing job according to an execution status of the executing job.

19. An information processing method comprising:
determining, in a case in which a user operation that is an operation of a user, which is performed in a case in which a new job different from an executing job that is a job being executed in an apparatus capable of executing an acquisition process of an image and a transmission process of the acquired image is executed, is present, content of information about an execution result of the executing job, the information being associated with the executing job, based on an execution status of the executing job; and
setting a state of an operation target unit operated in a case in which the user performs the user operation to a state in which the user operation is enabled, after the acquisition process of the executing job is ended.
